(19) Europäisches Patentamt / European Patent Office / Office européen des brevets

(11) **EP 3 400 320 B1**

(12) **FASCICULE DE BREVET EUROPEEN**

(45) Date de publication et mention de la délivrance du brevet:
**30.10.2019 Bulletin 2019/44**

(21) Numéro de dépôt: **17701794.4**

(22) Date de dépôt: **04.01.2017**

(51) Int Cl.:
*C25B 1/00* *(2006.01)* *C25B 11/04* *(2006.01)*
*H01G 9/20* *(2006.01)*

(86) Numéro de dépôt international:
**PCT/EP2017/050123**

(87) Numéro de publication internationale:
**WO 2017/118650 (13.07.2017 Gazette 2017/28)**

(54) **PHOTOCATHODE POUR UN DISPOSITIF DE PHOTOÉLECTROLYSE, UN PROCÉDÉ DE FABRICATION D'UNE TELLE PHOTOCATHODE ET UN DISPOSITIF DE PHOTOÉLECTROLYSE**

PHOTOKATHODE FÜR PHOTOELEKTROLYSE, HERSTELLUNGSVERFAHREN FÜR EINE SOLCHE PHOTOKATHODE, UND VORRICHTUNG ZUR PHOTOELEKTROLYSE

PHOTOCATHODE FOR PHOTOELECTROLYSIS, PROCESS OF MANUFACTURE OF SUCH A PHOTOCATHODE AND PHOTOELECTROLYZER.

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.01.2016 FR 1650018**

(43) Date de publication de la demande:
**14.11.2018 Bulletin 2018/46**

(73) Titulaires:
- **TOTAL RAFFINAGE CHIMIE**
  **92400 Courbevoie (FR)**
- **Commissariat à l'énergie atomique et aux énergies alternatives**
  **75015 Paris (FR)**
- **Sorbonne Université**
  **75006 Paris (FR)**
- **CENTRE NATIONAL DE LA RECHERCHE SCIENTIFIQUE**
  **75016 Paris (FR)**

(72) Inventeurs:
- **TOUPIN, Johanna**
  **75003 Paris (FR)**
- **ARTERO, Vincent**
  **38950 Quaix en Chartreuse (FR)**
- **LABERTY-ROBERT, Christel**
  **75005 Paris (FR)**

(74) Mandataire: **Croonenbroek, Thomas Jakob et al Innovincia**
**11, avenue des Tilleuls**
**74200 Thonon-les-Bains (FR)**

(56) Documents cités:
- **ZHONGHAI ZHANG ET AL: "Highly stable copper oxide composite as an effective photocathode for water splitting via a facile electrochemical synthesis strategy", JOURNAL OF MATERIALS CHEMISTRY, vol. 22, no. 6, 1 janvier 2012 (2012-01-01), page 2456, XP055102000, ISSN: 0959-9428, DOI: 10.1039/c1jm14478b**
- **DIPIKA SHARMA ET AL: "Improved Photoelectrochemical Water Splitting Performance of Cu 2 O/SrTiO 3 Heterojunction Photoelectrode", JOURNAL OF PHYSICAL CHEMISTRY C, vol. 118, no. 44, 6 novembre 2014 (2014-11-06), pages 25320-25329, XP055277026, US ISSN: 1932-7447, DOI: 10.1021/jp507039n**
- **SURBHI CHOUDHARY ET AL: "Nanostructured CuO/SrTiO3 bilayered thin films for photoelectrochemical water splitting", JOURNAL OF SOLID STATE ELECTROCHEMISTRY, vol. 17, no. 9, 11 juin 2013 (2013-06-11), pages 2531-2538, XP055277029, DE ISSN: 1432-8488, DOI: 10.1007/s10008-013-2139-7**

- **A. K. SHARMA ET AL: "An amorphous barium titanate thin film improves light trapping in Si solar cells", RSC ADVANCES: AN INTERNATIONAL JOURNAL TO FURTHER THE CHEMICAL SCIENCES, vol. 5, no. 74, 1 janvier 2015 (2015-01-01), pages 59881-59886, XP055277324, GB ISSN: 2046-2069, DOI: 10.1039/C5RA07923C**

**Description**

L'invention concerne une photocathode pour un dispositif de photoélectrolyse, un procédé de fabrication d'une telle photocathode et un dispositif de photoélectrolyse et plus largement la photo-électrolyse.

Les technologies à hydrogène sont de plus en plus plébiscitées du fait de leur caractère généralement peu ou non polluant.

Ces technologies se basent le plus souvent sur la génération d'électricité à partir de l'hydrogène pour entraîner par exemple des moteurs électriques, en particulier des moteurs électriques d'un véhicule automobile, grâce à une pile à combustible fonctionnant à l'hydrogène.

En effet, les rejets d'une telle pile à combustible sont non-polluants puisque la réaction du dihydrogène et du dioxygène produit à l'intérieur de la pile à combustible uniquement de l'eau.

Toutefois le succès de cette technologie prometteuse dépend en grande partie de la manière de produire du dihydrogène, ceci aussi en termes de coût qu'en termes d'écologie.

En effet, le dihydrogène produit par électrolyse coûte actuellement très cher et son caractère écologique dépend de la façon de production de l'électricité servant à alimenter un électrolyseur a été produite.

D'autres modes de production, par exemple par reformage du gaz naturel sont moins onéreux mais ont un impact écologique non négligeable.

Utiliser de l'électricité produite par une énergie renouvelable (par exemple par des panneaux photovoltaïques, des éoliennes ou des centrales hydroélectriques) pour la production du dihydrogène peut paraître séduisant, mais un calcul de rendement total et économique sur toute la chaîne de la génération à la combustion permet de comprendre les limites d'une telle démarche actuellement.

Une autre façon pour produire du dihydrogène de façon 100% écologique et plus simple consiste à réaliser une électrolyse de l'eau via l'énergie solaire, plus spécifiquement la photo-électrolyse directe de l'eau.

Fujishima et Honda ("Electrochemical Photolysis of Water at a Semiconductor Electrode," Nature, vol. 238, pp. 37-38, 1972.) ont publié pour la première fois en 1972 dans la revue Nature un article décrivant une cellule électrochimique composée d'une photoanode, un semiconducteur de type n, $TiO_2$ en phase rutile, et d'une cathode en platine. Lorsqu'elle était exposée au soleil, cette cellule était capable de réaliser l'électrolyse de l'eau. Ils ont ainsi montré qu'il était possible de produire du dihydrogène directement à partir de l'énergie solaire, soit de convertir cette énergie en une énergie chimique stockable. Depuis ces premiers travaux, de nombreux articles ont été publiés sur la conversion et le stockage photoélectrochimique mais peu concernent le dispositif dans son ensemble.

La photoélectrolyse est une électrolyse qui utilise directement la lumière. En effet, c'est un procédé qui permet de convertir la lumière en potentiel électrochimique, puis en énergie chimique, comme ce qui est observé lors de la photosynthèse des plantes vertes. C'est pourquoi on appelle ce type de réaction « la photosynthèse artificielle ».

Il existe plusieurs types de configurations possibles pour une cellule photoélectrochimique à une ou deux photoélectrodes, et différents positionnements des électrodes par rapport au rayonnement lumineux (voir par exemple N. Queyriaux, N. Kaeffer, A. Morozan, M. Chavarot-Kerlidou, and V. Artero, "Molecular cathode and photocathode materials for hydrogen evolution in photoelectrochemical devices," J. Photochem. Photobiol. C Photochemistry Reviews. 2015, 25, 90-105).

Les photons de la lumière sont absorbés par les électrons de la bande de valence de la photoanode, un exciton (ou paire électron-trou) est alors généré. Un électron, après absorption d'un photon suffisamment énergétique pour lui permettre de franchir la bande interdite, passe alors de la bande de valence à la bande de conduction. Un trou est donc simultanément créé dans la bande de valence.

Les trous atteignent la surface où ils réagissent avec les molécules d'eau présentes dans l'électrolyte.

Tandis que les électrons photogénérés passent de la bande de conduction via un circuit externe dans la bande de valence de la photocathode, créant ainsi un photocourant.

Pour réaliser une photocathode pour la photoélectrolyse, il est connu d'utiliser de l'oxyde de cuivre (I), $Cu_2O$, également appelé oxyde cuivreux ou cuprite (état naturel). En effet, l'oxyde de cuivre $Cu_2O$ est connu pour être un matériau semiconducteur de type p.

Néanmoins, l'oxyde de cuivre, comme beaucoup de matériaux, possède également des limitations, telles qu'en particulier des problèmes de photocorrosion.

La stratégie pour éviter tout contact entre le semi-conducteur et l'électrolyte est d'ajouter une couche de protection sur le semi-conducteur.

Ainsi, différents matériaux ont été et sont actuellement étudiés pour jouer le rôle de protection de l'oxyde de cuivre, tels que CuO (Z. Zhang and P. Wang, "Highly stable copper oxide composite as an effective photocathode for water splitting via a facile electrochemical synthesis strategy," J. Mater. Chem., vol. 22, no. 6, pp. 2456-2464, 2012) $TiO_2$ (W. Siripala, A. Ivanovskaya, T. F. Jaramillo, S. H. Baeck, and E. W. McFarland, "A Cu2O/TiO2 heterojunction thin film cathode for photoelectrocatalysis," Sol. Energy Mater. Sol. Cells, vol. 77, no. 3, pp. 229-237, 2003), NiO (C.-Y. Lin, Y.-H. Lai, D. Mersch, and E. Reisner, "Cu2O|NiOx nanocomposite as an inexpensive photocathode in photoelectrochemical water splitting," Chem. Sci., vol. 3, no. 12, p. 3482, 2012.), C (Z. Zhang, R. Dua, L. Zhang, H. Zhu, H. Zhang, and P. Wang, "Carbon-Layer-Protected Cuprous oxide nanowire arrays for efficient water réduction," ACS Nano, vol. 7, no. 2, pp. 1709-1717, 2013), SrTiO$_3$ (D. Sharma, S. Upadhyay, V. R. Satsangi, R. Shrivastav, U. V Waghmare, and S. Dass, "Improved Photoelectrochemical Water Splitting Performance of Cu2O/SrTiO3 Heterojunction Photoelectrode," J. Phys. Chem. C, vol. 118, no. Ii, pp. 25320-25329, 2014) par exemple.

Bien qu'une amélioration notamment de la stabilité en milieux aqueux de la photocathode ait pu être observée, celle-ci s'est faite dans certains cas au détriment du rendement.

La présente invention vise à proposer une photocathode pour une cellule photoélectrochimique qui présente une stabilité suffisante en particulier dans le temps et dans la mesure du possible pour une plage de pH élargie et un rendement amélioré.

A cet effet, l'invention a pour objet une photocathode pour dispositif de photoélectrolyse comprenant :

- un substrat,
- une couche d'un conducteur métallique disposée sur le substrat,
- au moins une première couche d'un premier semi-conducteur de type p disposée sur la couche de conducteur métallique,
- au moins une deuxième couche d'un deuxième semi-conducteur de type p disposée sur la première couche du premier semi-conducteur de type p,
- au moins une troisième couche d'un troisième semi-conducteur de type n formant couche de protection et disposée sur la deuxième couche du deuxième semi-conducteur de type p, la troisième couche du troisième semi-conducteur de type n étant stable en milieux aqueux de sorte à empêcher le contact entre un électrolyte aqueux et les première et deuxième couches des premier et deuxième semi-conducteurs de type p et étant composée d'un matériau du type ABO$_3$, où A est choisi parmi Ca, Sr et Ba et B est choisi parmi Ti, Fe,
- l'énergie du bas de la bande de conduction du premier semi-conducteur de type p étant supérieure à l'énergie du bas de la bande de conduction du deuxième semi-conducteur de type p,
- l'énergie du bas de la bande de conduction du deuxième semi-conducteur de type p étant supérieure à l'énergie du bas de la bande de conduction du troisième semi-conducteur de type n, et
- l'énergie du bas de la bande de conduction du troisième semi-conducteur de type n est supérieure à l'énergie de réduction de protons en dihydrogène.

Selon d'autres caractéristiques prises seules ou en combinaison :
Selon un autre aspect, la couche de conducteur disposée sur le substrat est du cuivre.

Le premier semi-conducteur de type p est par exemple du Cu$_2$O et le deuxième semi-conducteur de type p est du CuO.

Le troisième semi-conducteur de type n peut être du BaTiO$_3$.

Le substrat est par exemple du verre recouvert d'un conducteur transparent, en particulier un verre FTO.

On peut prévoir que l'épaisseur de la couche de conducteur est comprise entre 5μm et 15μm, notamment entre 8μm et 12μm, en particulier 10μm.

L'épaisseur de la première couche du premier semi-conducteur de type p est par exemple comprise entre 30μm et 50μm, notamment entre 35μm et 45μm, en particulier 40μm.

L'épaisseur de la deuxième couche du deuxième semi-conducteur de type p peut être comprise entre 0.5μm et 3μm, notamment entre 1μm et 2μm, en particulier 1.5μm.

L'épaisseur de la troisième couche du troisième semi-conducteur de type n est par exemple comprise entre 150nm et 350nm, notamment entre 200nm et 300nm, en particulier 250nm.

Selon encore un autre aspect, la largeur de la bande interdite du premier semi-conducteur est plus grande que la largeur de la bande interdite du deuxième semi-conducteur.

L'invention concerne également un procédé de fabrication d'une photocathode telle que définie ci-dessus, dans lequel on réalise la photocathode par un dépôt successif des différentes couches, en particulier par dépôt chimique en phase vapeur.

L'invention concerne également un procédé de fabrication d'une photocathode telle que définie ci-dessus dans lequel les premier et deuxième semi-conducteurs de type p sont des oxydes du métal formant la couche de conducteur métallique,

- on dépose une couche de conducteur métallique sur le substrat,

- on réalise la première couche du premier semi-conducteur de type p et la deuxième couche du deuxième semi-conducteur de type p par calcination, et

- on dépose la troisième couche du troisième semi-conducteur de type n sur la deuxième couche du deuxième semi-conducteur de type p.

Selon un aspect, le métal formant le conducteur métallique est du cuivre et la calcination est réalisée sous atmosphère d'air à une température comprise entre 240°C et 260°C, notamment 250°C, pendant une durée comprise entre 25min et 35min, en particulier 30min.

Selon un autre aspect, on dépose la troisième couche du troisième semi-conducteur de type n par voie sol-gel couplé une méthode de revêtement par trempage.

La calcination a par exemple lieu sous air sec pendant un temps compris entre 30min et 2h, plus particulièrement une heure et à une température comprise entre 550°C et 770°C, plus particulièrement 600°C pour le $BaTiO_3$ afin de le cristalliser.

On peut prévoir que l'on réalise avant le dépôt de la couche de conducteur un traitement de réduction sur le substrat.

Enfin l'invention concerne un dispositif de photoélectrolyse caractérisé en ce qu'il comporte une photocathode telle que définie ci-dessus.

D'autres avantages et caractéristiques apparaîtront à la lecture de la description des figures suivantes, parmi lesquelles :

- la figure 1 est un schéma général d'un dispositif de photoélectrolyse,
- la figure 2 est un schéma simplifié des couches d'une photocathode selon un mode de réalisation,
- la figure 3 est un schéma des diagrammes de bandes d'une photocathode selon un mode de réalisation,
- la figure 4 est un schéma d'un mode de réalisation d'un procédé de fabrication d'une photocathode selon l'invention,
- la figure 5 est un cliché au microscope électronique à balayage d'une photocathode après une étape intermédiaire du procédé de fabrication,
- la figure 6 est un cliché au microscope électronique à balayage d'une photocathode après l'étape finale du procédé de fabrication,
- la figure 7 montre sur un graphe l'absorbance d'un exemple d'une photocathode selon l'invention en fonction de la longueur d'onde, et
- la figure 8 est un schéma de chronoampériométrie.

Sur toutes les figures les mêmes références se rapportent aux mêmes éléments.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

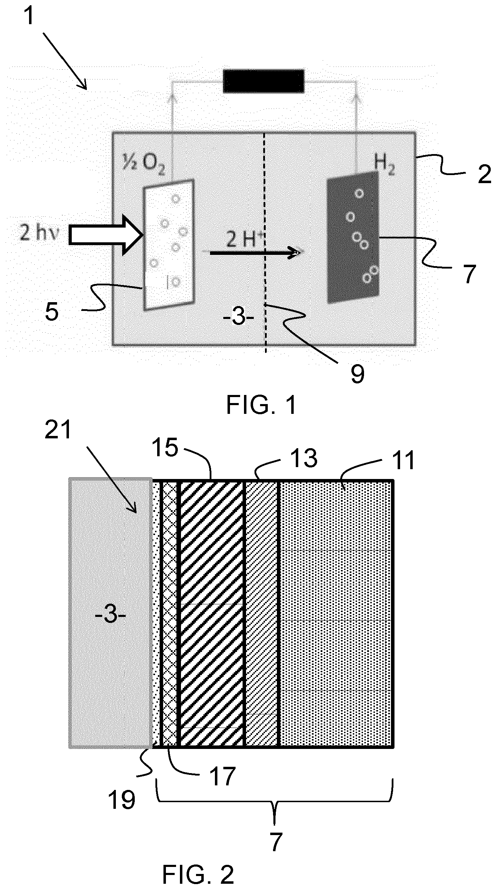

La figure 1 montre un schéma d'un dispositif 1 de photoélectrolyse selon l'invention. Un tel dispositif 1 est également appelé cellule photoélectrochimique et comprend une enceinte 2 remplie de l'eau 3 comme électrolyte deux photoélectrodes 5 et 7 par exemple sous forme de plaques, une photoanode 5 qui est un semi-conducteur de type n, et une photocathode 7 qui est un semi-conducteur de type p. L'électrolyte peut aussi contenir un tampon phosphate (PBS) ou $Na_2SO_4$ dissout dans l'eau.

Les deux photoélectrodes 5 et 7 sont séparées par une membrane 9 échangeuse de protons (par exemple une membrane en $C_7HF_{13}O_5S.C_2F_4$ commercialisée sous la marque enregistrée Nafion™) interposée entre les deux photoélectrodes 5 et 7.

Selon le schéma général, les semi-conducteurs absorbent l'énergie solaire (2hv), générant alors une tension nécessaire pour décomposer l'eau.

En effet, les photons de la lumière sont absorbés par les électrons de la bande de valence de la photoanode 5, un exciton (ou paire électron-trou) est alors généré. Un électron, après absorption d'un photon suffisamment énergétique pour lui permettre de franchir la bande interdite, passe alors de la bande de valence à la bande de conduction. Un trou est donc simultanément créé dans la bande de valence.

Les trous atteignent la surface où ils réagissent avec les molécules d'eau de l'électrolyte 3. Celles-ci sont ainsi oxydées en dioxygène et en protons, selon l'équation suivante :

$$2H_2O + 4h^+ \leftrightarrow O_2 + 4H^+ \ (E^0_{OX} = 1.23V \ vs \ NHE \ \text{à pH 0}).$$

Les électrons photogénérés passent de la bande de conduction via un circuit externe dans la bande de valence de la photocathode, créant ainsi un photocourant.

Parallèlement, à la photocathode 7, lorsqu'elle est éclairée, il se forme également des paires électron-trou. La différence avec la photoanode 5 est que cette fois ce sont les électrons qui vont à l'interface semi-conducteur/électrolyte pour réduire les protons H+, résultants de l'oxydation de l'eau à la photoanode 5 et diffusant à travers l'électrolyte 3 et la membrane 9, en dihydrogène, selon l'équation:

$$4H^+ + 4e^- \leftrightarrow 2H_2(\ E_{RED}^0 = 0V\ vs\ NHE \text{ en milieu acide}).$$

La figure 2 montre différentes couches d'un exemple d'une photocathode 7 selon l'invention.

Ainsi, la photocathode 7 comprend

- un substrat 11,
- une couche 13 d'un conducteur métallique disposée sur le substrat 11,
- au moins une première couche 15 d'un premier semi-conducteur de type p disposée sur la couche 13 de conducteur métallique,
- au moins une deuxième couche 17 d'un deuxième semi-conducteur de type p disposée sur la première couche 15 du premier semi-conducteur de type p,
- au moins une troisième couche 19 d'un troisième semi-conducteur de type n formant couche de protection et disposée sur la deuxième couche 17 du deuxième semi-conducteur de type p.

La couche 11 de substrat est par exemple du verre FTO, c'est-à-dire du verre recouvert de dioxyde d'étain dopé fluor et sert de support à toute la photocathode 7.

La couche 13 de conducteur métallique est par exemple en cuivre Cu.

L'épaisseur de la couche 13 de conducteur métallique est comprise entre 5$\mu$m et 15$\mu$m, notamment entre 8$\mu$m et 12$\mu$m, en particulier 10$\mu$m.

Puis la couche 15 du premier semi-conducteur de type p est en $Cu_2O$. L'épaisseur de la première couche 15 du premier semi-conducteur de type p est comprise entre 30$\mu$m et 50$\mu$m, notamment entre 35$\mu$m et 45$\mu$m, en particulier 40$\mu$m.

Mais bien entendu, d'autres semi-conducteurs de type p sont envisageables sans sortir du cadre de la présente invention.

Puis la couche 17 du deuxième semi-conducteur de type p est par exemple en CuO. L'épaisseur de la deuxième couche 17 du deuxième semi-conducteur de type p est comprise entre 0.5$\mu$m et 3$\mu$m, notamment entre $\mu$m et 2$\mu$m, en particulier 1.5$\mu$m.

Mais bien entendu, d'autres semi-conducteurs de type p sont envisageables sans sortir du cadre de la présente invention.

Le fait de combiner les couches 13 en Cu, 15 en $Cu_2O$ et 17 en CuO permet d'absorber des photons photogénérant ensuite des électrons sur une plus large gamme de longueur d'onde, notamment dans le visible, jusqu'à près de 900nm. En effet, la largeur de la bande interdite du premier semi-conducteur $Cu_2O$ est plus grande que la largeur de la bande interdite du deuxième semi-conducteur CuO. Les bandes d'absorption des deux semi-conducteurs de type p sont donc en partie complémentaire.

La faible largeur interdite de CuO (environ 1,5eV) ajoute ainsi par rapport au $Cu_2O$ une plage supplémentaire d'absorption vers les longueurs d'ondes plus importantes dans le rouge et le proche infrarouge.

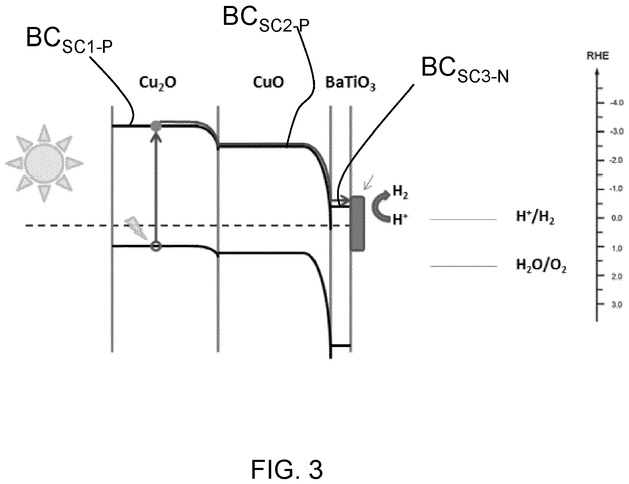

Comme on le voit sur la figure 3, afin que les électrons photogénérés puissent facilement migrer à la surface 21 (figure 2) de la photocathode 7, l'énergie du bas de la bande de conduction du premier semi-conducteur de type p $BC_{SC1-P}$ (pour « bande de conduction du premier semi-conducteur de type p ») est supérieure à l'énergie du bas de la bande de conduction du deuxième semi-conducteur de type p $BC_{SC2-P}$, ce qui est le cas avec les couches 15 en $Cu_2O$ et 17 en CuO.

Mais bien entendu, d'autres semi-conducteurs de type p sont envisageables sans sortir du cadre de la présente invention si on respecte cette relation entre les énergies du bas de la bande de conduction des premier et deuxième semi-conducteurs.

La couche 19 du troisième semi-conducteur de type n est une couche de protection et à ce titre, elle est stable en milieux aqueux de sorte à empêcher le contact entre un électrolyte aqueux 3 et les couches 15 et 17 des premier et deuxième semi-conducteurs de type p.

La couche 19 est par exemple composée d'un matériau du type $ABO_3$, où A est choisi parmi Ca, Sr et Ba et B est choisi parmi Ti, Fe.

L'épaisseur de la troisième couche 19 du troisième semi-conducteur de type n est comprise entre 150nm et 350nm, notamment entre 200nm et 300nm, en particulier 250nm. En effet, cette troisième couche 19 doit être assez épaisse pour bien protéger les couches 15 et 17 de l'électrolyte 3 mais aussi assez fine pour permettre la migration des électrons photogénérés à la surface 21 de la photocathode 7 pour permettre la recombinaison des protons H$^+$ en molécules de dihydrogène H$_2$.

Pour cette raison, l'énergie du bas de la bande de conduction du deuxième semi-conducteur de type p BC$_{SC2-P}$ est supérieure à l'énergie du bas de la bande de conduction du troisième semi-conducteur de type n BC$_{SC3-N}$ (voir figure 3).

De plus, l'énergie du bas de la bande de conduction du troisième semi-conducteur de type n BC$_{SC3-N}$ est supérieure à l'énergie de réduction de protons en dihydrogène.

La figure 3 montre un schéma des diagrammes de bandes dans le cas où la couche 19 du troisième semi-conducteur de type n est du BaTiO$_3$.

On comprend donc que la photocathode 7 selon l'invention améliore la quantité d'électrons photogénérés par une plus grande plage d'absorption, tout en favorisant, par un effet de « tobbogan » pour les électrons photogénérés du fait de l'énergie dégressive du bas des bandes de conduction des différentes couches 15, 17 et 19, la migration des électrons vers la surface 21 de la photocathode 7. De plus, la photocathode 7 est bien protégée contre la détérioration par l'électrolyte 3 par la couche de protection 19 formée par exemple par du BaTiO$_3$.

Un autre avantage de la photocathode ayant des couches 13, 15 et 17 respectivement en Cu, Cu$_2$O, CuO vient du fait que cette succession de couches peut être obtenue par dépôt de cuivre puis des traitements par exemple de calcination sur la couche de métal déposée, ce qui est simple, peu onéreux et écologiquement favorable.

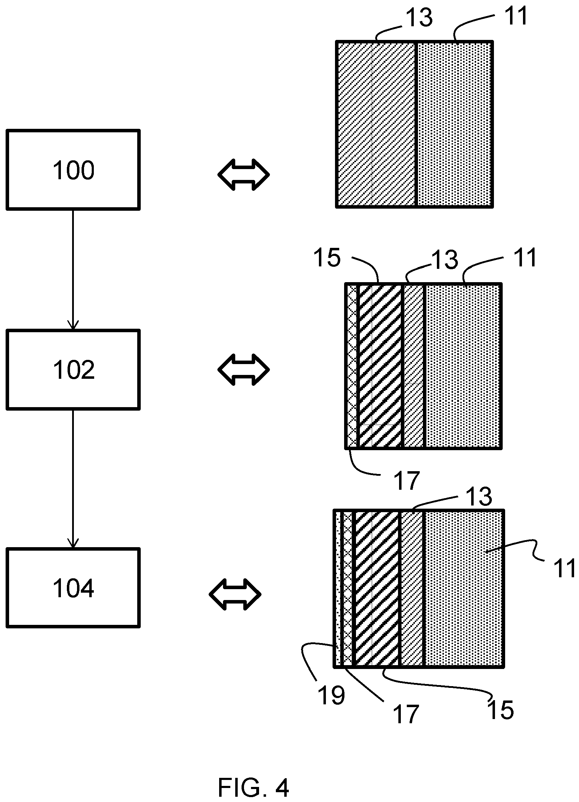

Plus en détail, la figure 4 détaille les différentes étapes d'un procédé de fabrication d'une photocathode 7 dans lequel les premier et deuxième semi-conducteurs de type p sont des oxydes du métal formant la couche de conducteur métallique.

Ainsi, selon une étape 100, on dépose une couche 13 de conducteur métallique sur le substrat 11.

Pour favoriser l'adhérence du conducteur métallique sur le substrat 11, on peut réaliser avant le dépôt de la couche de conducteur un traitement de réduction sur le substrat 11.

Puis on réalise selon une étape 102 la première couche 15 du premier semi-conducteur de type p et la seconde couche 17 du deuxième semi-conducteur de type p par une calcination partielle de la couche 13 de conducteur métallique.

Dans le cas où le métal formant le conducteur métallique est du cuivre, la calcination est réalisée sous atmosphère d'air à une température comprise entre 240°C et 260°C, notamment 250°C, pendant une durée comprise entre 25min et 35min, en particulier 30min

Enfin, on dépose la troisième couche 19 du troisième semi-conducteur de type n sur la seconde couche 17 du deuxième semi-conducteur de type p.

Le dépôt de la troisième couche 19 du troisième semi-conducteur de type n est par exemple réalisé par voie sol-gel couplée à une méthode de revêtement par trempage-retrait.

EXEMPLES

Dans un premier temps, les électrodes composées d'oxyde(s) de cuivre sont synthétisées ; puis, les matériaux qui feront office de protection seront déposés dans un deuxième temps.

1) Synthèse et dépôt des oxydes de cuivre

La formation des films d'oxydes de cuivre peut être réalisée par une voie sol-gel ou par électrodéposition-anodisation du cuivre.

1.1) Formation des couches 15 et 17 d'oxydes de cuivre par une voie sol-gel :

1.1.1) Revêtement par trempage (« Dip-coating » en anglais) :
A partir d'un sol composé de 1.75g de CuCl$_2$.2H$_2$O dans 5.5g de méthanol, cinq couches sont déposées par revêtement par trempage sur un substrat de verre, recouvert de FTO (SnO2 :F) sur une face, préalablement lavé à l'éthanol. Chaque couche est déposée sous air sec (RH<5%) à une vitesse de 3.5mm/s et un traitement thermique d'une minute à 450°C est effectué entre chaque couche.

1.1.2) Calcination : sous air pendant 30 min à 450°C.

1.2) Formation des couches 15 et 17 d'oxydes de cuivre par électrodéposition-anodisation du cuivre :

1.2.1) Réduction du FTO :
On utilise une solution de 250mL avec 0,01M de Na$_2$SO$_4$.10H$_2$O et 0,1M de H$_2$SO$_4$ dans laquelle un courant cathodique au FTO de 25mA/cm$^2$ est appliqué pendant 20 sec. Les substrats utilisés pour ce type de synthèse sont différents des substrats verre/FTO utilisés lors de la synthèse sol-gel. En effet, cette voie de synthèse nécessite une couche de FTO possédant une plus faible résistivité (7$\Omega$).

1.2.2) Electrodéposition :

On prépare une solution acide de sulfate de cuivre à 0,8M, soit 63,92g de Cu(SO$_4$) et 22,5g de H$_2$SO$_4$ complétée avec de l'eau distillée pour obtenir un volume total de 500mL. La couche de cuivre 13 est électrodéposée sur le substrat à (-)220mA/cm$^2$ (avec une contre-électrode en cuivre) entre 10 min et 30 min, puis l'électrode est rincée à l'eau distillée.

1.2.3) Anodisation :

On prépare une solution de soude à 1M, soit 20g de NaOH dans 500mL d'eau distillée. La couche de cuivre 13 électrodéposée est à présent anodisée à 0.5mA/cm$^2$ entre 10 min et 30 min, puis l'électrode est rincée à l'eau distillée.

1.2.4) Calcination :

Sous air pendant 30min à une température à environ 250°C pour former les couches 15 en Cu$_2$O et 17 en Cu.

2) Synthèse et dépôt de la protection:

La couche 19 de protection par exemple en BaTiO$_3$ est ensuite déposée sur la surface de l'une ou l'autre des deux types d'électrode à base d'oxyde(s) de cuivre.

Le titanate de baryum est synthétisable par différentes voies. Une voie possible est la voie sol-gel couplée au revêtement par trempage-retrait, car la chimie peut être qualifiée de douce, simple, peu onéreuse et facilement adaptable à l'échelle industrielle. La composition du sol pour obtenir du BaTiO$_3$ est donnée comme suit :

| BaTiO$_3$ |
| --- |
| 1.42g Ba(OH)$_2$.7H$_2$O |
| 6g acide acétique glacial |
| 9g éthanol absolu |
| 0.36g acétylacétone |
| 1.36g isopropoxide de titane |

La couche 19 de BaTiO$_3$ est déposée, par exemple en deux passes, à partir des sols dont la composition est indiquée dans le tableau ci-dessus, sur les électrodes composées d'oxyde(s) de cuivre. Un traitement thermique d'une minute à 400°C est effectué entre chaque passe déposée afin de les stabiliser. Enfin, la calcination a lieu sous air sec pendant un temps compris entre 30min et 2h, plus particulièrement une heure à une température comprise entre 550°C et 770°C, plus particulièrement 600°C pour BaTiO$_3$ afin de le cristalliser. Un cas intéressant est une calcination à 600°C pendant une heure.

Bien entendu, on peut également fabriquer une photocathode telle que décrite en référence aux figures 1 à 3 par un dépôt successif des différentes couches, en particulier par dépôt chimique en phase vapeur.

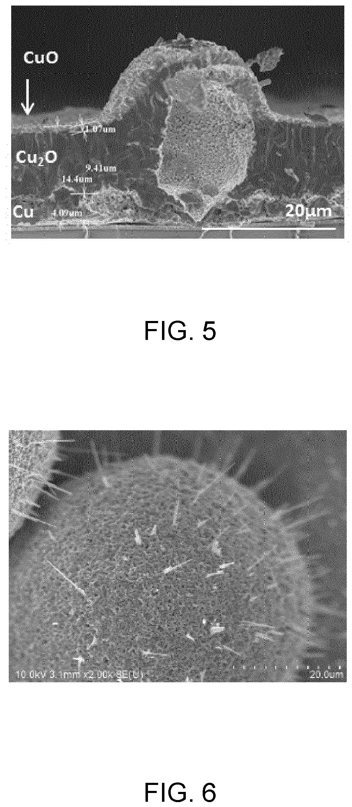

La figure 5 montre un cliché au microscope électronique à balayage d'une photocathode après l'étape 102.

On y voit que la surface présente une structure particulière composée d'un fond continu composé successivement des couches de Cu, Cu$_2$O et CuO ; ainsi que de boules creuses dues au dégagement de dihydrogène pendant l'électrodéposition du cuivre. Ceci est intéressant, car cela permet de maximiser l'interface électrode/électrolyte, siège de la réaction entre les protons de l'électrolyte et les électrons de l'électrode. De plus, cela permet également de minimiser le trajet des électrons photogénérés au sein de la photocathode 7 vers l'interface avec l'électrolyte.

Ces boules sont elles-mêmes singulières puisqu'elles présentent des aiguilles sur toute leur surface.

La formation des aiguilles pourrait être liée à la réaction à l'interface Cu$_2$O/CuO qui produit un stress compressif dans la couche de CuO et qui conduit à la diffusion des cations de cuivre le long des joints de grains de CuO, résultant à une croissance d'aiguilles sur des grains de CuO. Ainsi, les grains de CuO existants servent de support pour initier la croissance des aiguilles de CuO. En effet, les cations de cuivre diffusant le long des joints de grains sont déposés sur le haut des grains via la diffusion surfacique. Cette diffusion est entraînée par les gradients de concentration en ions Cu entre les joints de grain, zone de jonction, et la racine des nanofils.

L'épaisseur de la couche de CuO à partir de laquelle la croissance des aiguilles / nanofils débute est d'environ 1$\mu$m.

La figure 6 montre un cliché au microscope électronique à balayage d'une photocathode après l'étape 104.

La couche 19 de protection en BaTiO$_3$ recouvre uniformément toute la surface des électrodes à base de cuivre. De plus, le dépôt de BaTiO$_3$ n'altère que peu la surface des électrodes Cu/Cu$_2$O/CuO. Des aiguilles de CuO sont encore présentes même si la plupart ont été cassées lors du dépôt par revêtement par trempage en BaTiO$_3$.

L'épaisseur des couches de BaTiO$_3$ est négligeable devant celle des oxydes de cuivre. En effet, elle est de l'ordre de 200-300nm, tandis que celle de CuO est comprise entre 1 et 2$\mu$m, et celle de Cu$_2$O de l'ordre de 40$\mu$m et celle Cu d'environ 10$\mu$m pour un échantillon électrodéposé pendant 20min et anodisé pendant la même durée.

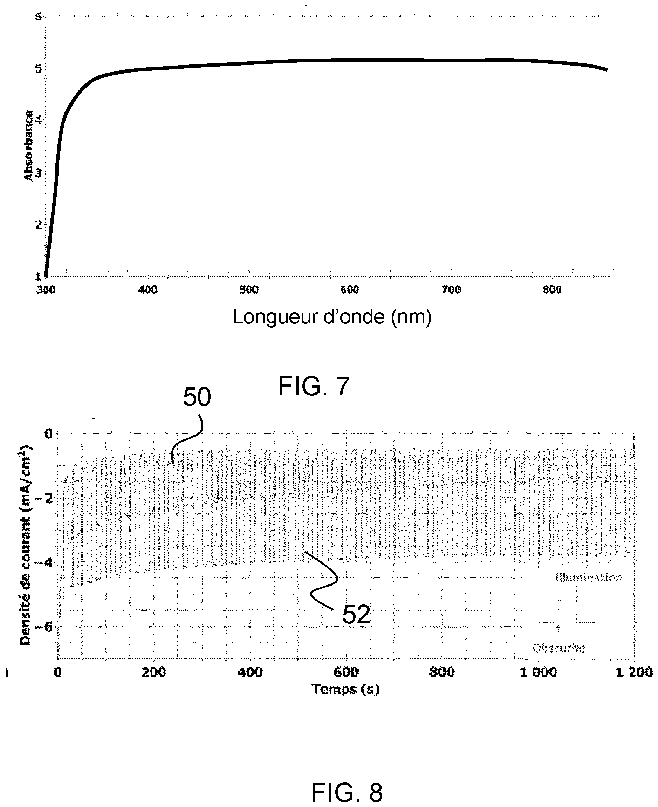

La figure 7 montre à titre d'exemple l'absorbance d'une photocathode Cu/Cu$_2$O/CuO/BaTiO$_3$. On voit que l'absorbance est quasiment stable dans une large gamme de longueurs d'onde allant d'environ 370nm à 900nm. L'absorbance plus faible dans l'UV résulte plutôt d'un artéfact non corrigé de l'appareil de mesure et devrait être plus élevé que montré sur le graphe.

La figure 8 montre deux courbes de chronoampériométrie une courbe 50 pour une photocathode Cu/Cu$_2$O/CuO non protégée par une couche de protection 19, et une courbe 52 pour une photocathode Cu/Cu$_2$O/CuO/BaTiO$_3$ selon un exemple de réalisation de la présente invention.

Une chronoampérométrie est réalisée à oV vs RHE, pH6, en alternant les périodes dans l'obscurité et sous illumination à une fréquence de 0,1Hz.

Pour la courbe 50, on voit que la valeur absolue diminue en fonction du temps. Cela est dû à la photocorrosion des oxydes de cuivre en cuivre métal, ainsi les électrodes se désactivent au cours du temps, le cuivre métal n'étant pas une photoélectrode.

Pour la courbe 52 avec la couche 19 de protection, on augmente d'une part la valeur du photocourant et d'autre part on améliore largement la photostabilité qui reste quasiment stable dans le temps.

Le champ électrique créé à la jonction p-n entre l'oxyde de cuivre (CuO) et le titanate de baryum permet de mieux séparer les charges photogénérées et donc de limiter les recombinaisons électrons-trous. Ce phénomène, additionné d'une meilleure absorbance de la photocathode 7 protégée par une couche 19, permet d'expliquer l'augmentation de photocourant des électrodes protégées. De plus, la comparaison des valeurs de photocourant entre le début de la chronoampérométrie et après 20 min d'alternance entre l'obscurité et l'éclairement, montre que la photostabilité des électrodes non-protégées est comprise entre 47% et 60%, tandis que celle des électrodes protégées par BaTiO$_3$ est supérieure à 89%. La couche 19 de BaTiO$_3$ recouvre bien toute la surface des électrodes Cu/Cu$_2$O/CuO, ainsi ces dernières n'étant plus en contact avec l'électrolyte, elles ne subissent plus de photocorrosion. Tandis que les électrons continuent bien d'être transférés vers l'interface électrode/électrolyte afin de réduire les protons présents au sein de l'électrolyte en dihydrogène, ce qui explique la meilleure photostabilité observée.

On comprend donc que les photocathodes 7 selon l'invention permettent un meilleur rendement et montrent une plus grande stabilité dans le temps.

**Revendications**

**1.** Photocathode (7) pour dispositif (1) de photoélectrolyse de l'eau comprenant :

- un substrat (11),
- une couche (13) d'un conducteur métallique disposée sur le substrat (11),
- au moins une première couche (15) d'un premier semi-conducteur de type p disposée sur la couche (13) de conducteur métallique,
- au moins une deuxième couche (17) d'un deuxième semi-conducteur de type p disposée sur la première couche (15) du premier semi-conducteur de type p,
- au moins une troisième couche (19) d'un troisième semi-conducteur de type n formant couche de protection et disposée sur la deuxième couche (17) du deuxième semi-conducteur de type p, la troisième couche (19) du troisième semi-conducteur de type n étant stable en milieux aqueux de sorte à empêcher le contact entre un électrolyte aqueux et les première (15) et deuxième (17) couches des premier et deuxième semi-conducteurs de type p et étant composée d'un matériau du type ABO$_3$, où A est choisi parmi Ca, Sr et Ba et B est choisi parmi Ti, Fe,
- l'énergie du bas de la bande de conduction (BC$_{SC1-P}$) du premier semi-conducteur de type p étant supérieure à l'énergie du bas de la bande de conduction (BC$_{SC2-P}$) du deuxième semi-conducteur de type p,
- l'énergie du bas de la bande de conduction (BC$_{SC2-P}$) du deuxième semi-conducteur de type p étant supérieure à l'énergie du bas de la bande de conduction (BC$_{SC3-N}$) du troisième semi-conducteur de type n, et
- l'énergie du bas de la bande de conduction (BC$_{SC3-N}$) du troisième semi-conducteur de type n est supérieure à l'énergie de réduction de protons en dihydrogène.

2. Photocathode selon la revendication 1, **caractérisée en ce que** la couche (13) de conducteur disposée sur le substrat (11) est du cuivre.

3. Photocathode selon l'une quelconque des revendications 1 ou 2, **caractérisée en ce que** le premier semi-conducteur de type p est du $Cu_2O$ et le deuxième semi-conducteur de type p est du CuO.

4. Photocathode selon l'une quelconque des revendications 1 à 3, **caractérisée en ce que** le troisième semi-conducteur de type n est du $BaTiO_3$.

5. Photocathode selon l'une quelconque des revendications 1 à 4, **caractérisée en ce que** le substrat (11) est du verre recouvert d'un conducteur transparent, en particulier un verre FTO.

6. Photocathode selon l'une quelconque des revendications 1 à 7, **caractérisée en ce que** l'épaisseur de la couche (13) de conducteur est comprise entre $5\mu m$ et $15\mu m$, notamment entre $8\mu m$ et $12\mu m$, en particulier $10\mu m$.

7. Photocathode selon l'une quelconque des revendications 1 à 6, **caractérisée en ce que** l'épaisseur de la première couche (15) du premier semi-conducteur de type p est comprise entre $30\mu m$ et $50\mu m$, notamment entre $35\mu m$ et $45\mu m$, en particulier $40\mu m$.

8. Photocathode selon l'une quelconque des revendications 1 à 7, **caractérisée en ce que** l'épaisseur de la deuxième couche (17) du deuxième semi-conducteur de type p est comprise entre $0.5\mu m$ et $3\mu m$, notamment entre $1\mu m$ et $2\mu m$, en particulier $1.5\mu m$.

9. Photocathode selon l'une quelconque des revendications 1 à 8, **caractérisée en ce que** l'épaisseur de la troisième couche (19) du troisième semi-conducteur de type n est comprise entre 150nm et 350nm, notamment entre 200nm et 300nm, en particulier 250nm.

10. Photocathode selon l'une quelconque des revendications 1 à 9, **caractérisée en ce que** la largeur de la bande interdite du premier semi-conducteur est plus grande que la largeur de la bande interdite du deuxième semi-conducteur.

11. Procédé de fabrication d'une photocathode selon l'une quelconque des revendications 1 à 10 dans lequel, on réalise la photocathode par un dépôt successif des différentes couches, en particulier par dépôt chimique en phase vapeur.

12. Procédé de fabrication d'une photocathode selon l'une quelconque des revendications 1 à 10 dans lequel les premier et deuxième semi-conducteurs de type p sont des oxydes du métal formant la couche (13) de conducteur métallique,

   - on dépose une couche de conducteur métallique (13) sur le substrat (11),
   - on réalise la première couche (15) du premier semi-conducteur de type p et la deuxième couche (17) du deuxième semi-conducteur de type p par calcination, et
   - on dépose la troisième couche (19) du troisième semi-conducteur de type n sur la deuxième couche (17) du deuxième semi-conducteur de type p.

13. Procédé selon la revendication 12, **caractérisé en ce que** le métal formant le conducteur métallique est du cuivre et **en ce que** la calcination est réalisée sous atmosphère d'air à une température comprise entre 240°C et 260°C, notamment 250°C, pendant une durée comprise entre 25min et 35min, en particulier 30min.

14. Procédé selon la revendication 12 ou 13, **caractérisé en ce que** l'on dépose la troisième couche (19) du troisième semi-conducteur de type n par voie sol-gel couplé une méthode de revêtement par trempage.

15. Procédé selon l'une quelconque des revendications 12 à 14, **caractérisé en ce que** l'on réalise une calcination du troisième semi-conducteur de type n sous air sec pendant un temps compris entre 30min et 2h, plus particulièrement une heure et à une température comprise entre 550°C et 770°C, plus particulièrement 600°C pour le Ba-$TiO_3$ afin de le cristalliser.

16. Procédé selon l'une quelconque des revendications 11 à 15, **caractérisé en ce que** l'on réalise avant le dépôt de la couche de conducteur (13) un traitement de réduction sur le substrat (11).

17. Dispositif de photoélectrolyse **caractérisé en ce qu'**il comporte une photocathode selon l'une quelconque des revendications 1 à 10.


**Patentansprüche**

1. Photokathode (7) für Photoelektrolysevorrichtung (1) des Wassers, die Folgendes umfasst:

   - ein Substrat (11),
   - eine Schicht (13) aus einem metallischen Leiter, die auf dem Substrat (11) angeordnet ist,
   - mindestens eine erste Schicht (15) aus einem ersten Halbleiter vom p-Typ, die auf der Schicht (13) aus metallischem Leiter angeordnet ist,
   - mindestens eine zweite Schicht (17) eines zweiten Halbleiters vom p-Typ, die auf der ersten Schicht (15) des ersten Halbleiters vom p-Typ angeordnet ist,
   - mindestens eine dritte Schicht (19) eines dritten Halbleiters vom n-Typ, die eine Schutzschicht bildet und auf der zweiten Schicht (17) des zweiten Halbleiters vom p-Typ angeordnet ist, wobei die dritte Schicht (19) aus dem dritten Halbleiter vom n-Typ in wässriger Umgebung derart beständig ist, dass der Kontakt zwischen einem wässrigen Elektrolyt und der ersten (15) und zweiten (17) Schicht des ersten und zweiten Halbleiters vom p-Typ verhindert wird, und die aus einem Material vom Typ $ABO_3$ besteht, wobei A aus Ca, Sr und Ba ausgewählt ist, und B aus Ti, Fe ausgewählt ist,
   - wobei die Energie der unteren Seite des Leitungsbands ($BC_{SC1-P}$) des ersten Halbleiters vom p-Typ größer ist als die Energie der unteren Seite des Leitungsbands ($BC_{SC2-P}$) des zweiten Halbleiters vom p-Typ,
   - wobei die Energie der unteren Seite des Leitungsbands ($BC_{SC2-P}$) des zweiten Halbleiters vom p-Typ größer ist als die Energie der unteren Seite des Leitungsbands ($BC_{SC3-N}$) des dritten Halbleiters vom n-Typ, und
   - die Energie der unteren Seite des Leitungsbands ($BC_{SC3-N}$) des dritten Halbleiters vom n-Typ größer ist als die Reduktionsenergie von Protonen in Dihydrogen.

2. Photokathode nach Anspruch 1, **dadurch gekennzeichnet, dass** die Schicht (13) aus Leiter, die auf dem Substrat (11) angeordnet ist, Kupfer ist.

3. Photokathode nach einem der Ansprüche 1 oder 2, **dadurch gekennzeichnet, dass** der erste Halbleiter vom p-Typ $Cu_2O$ ist, und der zweite Halbleiter vom p-Typ CuO ist.

4. Photokathode nach einem der Ansprüche 1 bis 3, **dadurch gekennzeichnet, dass** der dritte Halbleiter vom n-Typ $BaTiO_3$ ist.

5. Photokathode nach einem der Ansprüche 1 bis 4, **dadurch gekennzeichnet, dass** das Substrat (11) Glas ist, das mit einem durchsichtigen Leiter bedeckt ist, insbesondere mit einem FTO-Glas.

6. Photokathode nach einem der Ansprüche 1 bis 7, **dadurch gekennzeichnet, dass** die Stärke der Schicht (13) aus Leiter zwischen 5 $\mu$m und 15 $\mu$m, insbesondere zwischen 8 $\mu$m und 12 $\mu$m liegt, besonders 10 $\mu$m beträgt.

7. Photokathode nach einem der Ansprüche 1 bis 6, **dadurch gekennzeichnet, dass** die Stärke der ersten Schicht (15) des ersten Halbleiters vom p-Typ zwischen 30 $\mu$m und 50 $\mu$m, insbesondere zwischen 35 $\mu$m und 45 $\mu$m liegt, besonders 40 $\mu$m beträgt.

8. Photokathode nach einem der Ansprüche 1 bis 7, **dadurch gekennzeichnet, dass** die Stärke der zweiten Schicht (17) des zweiten Halbleiters vom p-Typ zwischen 0,5 $\mu$m und 3 $\mu$m, insbesondere zwischen 1 $\mu$m und 2 $\mu$m liegt, besonders 1,5 $\mu$m beträgt.

9. Photokathode nach einem der Ansprüche 1 bis 8, **dadurch gekennzeichnet, dass** die Stärke der dritten Schicht (19) des dritten Halbleiters vom n-Typ zwischen 150 nm und 350 nm, insbesondere zwischen 200 nm und 300 nm liegt, besonders 250 nm beträgt.

10. Photokathode nach einem der Ansprüche 1 bis 9, **dadurch gekennzeichnet, dass** die Breite des verbotenen Bands des ersten Halbleiters größer ist als die Breite des verbotenen Bands des zweiten Halbleiters.

**11.** Herstellungsverfahren einer Photokathode nach einem der Ansprüche 1 bis 10, wobei die Photokathode durch eine sukzessive Abscheidung der unterschiedlichen Schichten, insbesondere durch chemische Gasphasenabscheidung, hergestellt wird.

**12.** Herstellungsverfahren einer Photokathode nach einem der Ansprüche 1 bis 10, wobei der erste und zweite Halbleiter vom p-Typ Oxide des Metalls, das die Schicht (13) aus metallischem Leiter bildet, sind,

- eine Schicht metallischen Leiters (13) auf dem Substrat (11) abgeschieden wird,
- die erste Schicht (15) des ersten Halbleiters vom p-Typ und die zweite Schicht (17) des zweiten Halbleiters vom p-Typ durch Kalzinieren hergestellt wird, und
- die dritte Schicht (19) des dritten Halbleiters vom n-Typ auf der zweiten Schicht (17) des zweiten Halbleiters vom p-Typ abgeschieden wird.

**13.** Verfahren nach Anspruch 12, **dadurch gekennzeichnet, dass** das Metall, das den metallischen Leiter bildet, Kupfer ist, und dass das Kalzinieren unter Luftatmosphäre bei einer Temperatur, die zwischen 240 °C und 260 °C liegt, insbesondere 250 °C beträgt, während einer Dauer, die zwischen 25 Min. und 35 Min. liegt, besonders 30 Min. beträgt, ausgeführt wird.

**14.** Verfahren nach Anspruch 12 oder 13, **dadurch gekennzeichnet, dass** die dritte Schicht (19) des dritten Halbleiters vom n-Typ durch Sol-Gel-Verfahren gekoppelt mit einem Tauchbeschichtungsverfahren abgeschieden wird.

**15.** Verfahren nach einem der Ansprüche 12 bis 14, **dadurch gekennzeichnet, dass** ein Kalzinieren des dritten Halbleiters vom n-Typ unter Trockenluft während einer Zeit, die zwischen 30 Min. und 2 Std. liegt, ganz besonders eine Stunde beträgt, und bei einer Temperatur zwischen 550 °C und 770 °C, ganz besonders bei 600 °C für $BaTiO_3$ ausgeführt wird, um dieses zu kristallisieren.

**16.** Verfahren nach einem der Ansprüche 11 bis 15, **dadurch gekennzeichnet, dass** vor dem Abscheiden der Leiterschicht (13) eine Reduktionsbehandlung auf dem Substrat (11) ausgeführt wird.

**17.** Photoelektrolysevorrichtung, **dadurch gekennzeichnet, dass** sie eine Photokathode nach einem der Ansprüche 1 bis 10 umfasst.

**Claims**

**1.** A photocathode (7) for a water photoelectrolysis device (1) comprising:

- a substrate (11),
- a layer (13) of a metallic conductor arranged on the substrate (11),
- at least one first layer (15) of a first p-type semiconductor arranged on the layer (13) of metallic conductor,
- at least one second layer (17) of a second p-type semiconductor arranged on the first layer (15) of the first p-type semiconductor,
- at least one third layer (19) of a third n-type semiconductor forming a protective layer and arranged on the second layer (17) of the second p-type semiconductor, the third layer (19) of the third n-type semiconductor being stable in aqueous media so as to prevent contact between an aqueous electrolyte and the first (15) and second (17) layers of the first and second p-type semiconductors and being composed of an $ABO_3$-type material, where A is selected from Ca, Sr and Ba, and B is selected from Ti and Fe,
- the energy of the bottom of the conduction band ($CB_{SC1-P}$) of the first p-type semiconductor being greater than the energy of the bottom of the conduction band ($CB_{SC2-P}$) of the second p-type semiconductor,
- the energy of the bottom of the conduction band ($CB_{SC2-P}$) of the second p-type semiconductor being greater than the energy of the bottom of the conduction band ($CB_{SC3-N}$) of the third n-type semiconductor, and
- the energy of the bottom of the conduction band ($CB_{SC3-N}$) of the third n-type semiconductor being greater than the reduction energy of protons to dihydrogen.

**2.** The photocathode according to claim 1, **characterised in that** the layer (13) of conductor arranged on the substrate (11) is copper.

**3.** The photocathode according to either of claims 1 and 2, **characterised in that** the first p-type semiconductor is

$Cu_2O$ and the second p-type semiconductor is CuO.

4. The photocathode according to any one of claims 1 to 3, **characterised in that** the third n-type semiconductor is $BaTiO_3$.

5. The photocathode according to any one of claims 1 to 4, **characterised in that** the substrate (11) is glass covered with a transparent conductor, in particular an FTO glass.

6. The photocathode according to any one of claims 1 to 7, **characterised in that** the thickness of the conductor layer (13) is between 5 $\mu$m and 15 $\mu$m, specifically between 8 $\mu$m and 12 $\mu$m, in particular 10 $\mu$m.

7. The photocathode according to any one of claims 1 to 6, **characterised in that** the thickness of the first layer (15) of the first p-type semiconductor is between 30 $\mu$m and 50 $\mu$m, specifically between 35 $\mu$m and 45 $\mu$m, in particular 40 $\mu$m.

8. The photocathode according to any one of claims 1 to 7, **characterised in that** the thickness of the second layer (17) of the second p-type semiconductor is between 0.5 $\mu$m and 3 $\mu$m, specifically between 1 $\mu$m and 2 $\mu$m, in particular 1.5 $\mu$m.

9. The photocathode according to any one of claims 1 to 8, **characterised in that** the thickness of the third layer (19) of the third n-type semiconductor is between 150 nm and 350 nm, specifically between 200 nm and 300 nm, in particular 250 nm.

10. The photocathode according to any one of claims 1 to 9, **characterised in that** the width of the forbidden band of the first semiconductor is greater than the width of the forbidden band of the second semiconductor.

11. A method for manufacturing a photocathode according to any one of claims 1 to 10, wherein the photocathode is produced by successive deposition of the various layers, in particular by chemical vapour deposition.

12. A method for manufacturing a photocathode according to any one of claims 1 to 10 wherein the first and second p-type semiconductors are oxides of the metal forming the metallic conductor layer (13),

- a metallic conductor layer (13) is deposited on the substrate (11),
- the first layer (15) of the first p-type semiconductor and the second layer (17) of the second p-type semiconductor are produced by calcination, and
- the third layer (19) of the third n-type semiconductor is deposited on the second layer (17) of the second p-type semiconductor.

13. The method according to claim 12, **characterised in that** the metal forming the metallic conductor is copper and **in that** the calcination is carried out under an atmosphere of air at a temperature of between 240 °C and 260 °C, specifically 250 °C, for a duration of between 25 min. and 35 min., in particular 30 min.

14. The method according to claim 12 or 13, **characterised in that** the third layer (19) of the third n-type semiconductor is deposited via a sol-gel method coupled with a dip-coating method.

15. The method according to any one of claims 12 to 14, **characterised in that** the calcination of the third n-type semiconductor under dry air is carried out for a time of between 30 min. and 2 h, more particularly one hour and at a temperature between 550 °C and 770 °C, more particularly 600 °C for $BaTiO_3$ in order to crystallise same.

16. The method according to any one of claims 11 to 15, **characterised in that** a reduction treatment is carried out on the substrate (11) before the deposition of the conductor layer (13).

17. A photoelectrolysis device **characterised in that** it comprises a photocathode according to any one of claims 1 to 10.

FIG. 1

FIG. 2

FIG. 3

FIG. 4

FIG. 5

FIG. 6

FIG. 7

FIG. 8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **FUJISHIMA ; HONDA.** Electrochemical Photolysis of Water at a Semiconductor Electrode. *Nature,* 1972, vol. 238, 37-38
- **N. QUEYRIAUX ; N. KAEFFER ; A. MOROZAN ; M. CHAVAROT-KERLIDOU ; V. ARTERO.** Molecular cathode and photocathode materials for hydrogen evolution in photoelectrochemical devices. *J. Photochem. Photobiol. C Photochemistry Reviews,* 2015, vol. 25, 90-105
- **Z. ZHANG ; P. WANG.** Highly stable copper oxide composite as an effective photocathode for water splitting via a facile electrochemical synthesis strategy. *J. Mater. Chem.,* 2012, vol. 22 (6), 2456-2464
- **W. SIRIPALA ; A. IVANOVSKAYA ; T. F. JARAMILLO ; S. H. BAECK ; E. W. MCFARLAND.** A Cu2O/TiO2 heterojunction thin film cathode for photoelectrocatalysis. *Sol. Energy Mater. Sol. Cells,* 2003, vol. 77 (3), 229-237
- **C.-Y. LIN ; Y.-H. LAI ; D. MERSCH ; E. REISNER.** Cu2O|NiOx nanocomposite as an inexpensive photocathode in photoelectrochemical water splitting. *Chem. Sci.,* 2012, vol. 3 (12), 3482
- **Z. ZHANG ; R. DUA ; L. ZHANG ; H. ZHU ; H. ZHANG ; P. WANG.** Carbon-Layer-Protected Cuprous oxide nanowire arrays for efficient water réduction. *ACS Nano,* 2013, vol. 7 (2), 1709-1717
- **D. SHARMA ; S. UPADHYAY ; V. R. SATSANGI ; R. SHRIVASTAV ; U. V WAGHMARE ; S. DASS.** Improved Photoelectrochemical Water Splitting Performance of Cu2O/SrTiO3 Heterojunction Photoelectrode. *J. Phys. Chem. C,* 2014, vol. 118 (Ii), 25320-25329